# EUROPEAN PATENT APPLICATION

(11) **EP 4 794 146 A1**
(43) Date of publication of application: **19.08.2026**
(21) Application number: 24877520.7
(22) Date of filing: 10.10.2024
(51) Int. Cl.: H02G 7/05, H02G 1/02, G02B 6/38, G01M 11/00

(54) **CLAMP HAVING MONITORING FUNCTION OF CENTRAL TENSION LINE FOR OVERHEAD TRANSMISSION LINE AND OVERHEAD TRANSMISSION LINE SYSTEM INCLUDING SAME**

(30) Priority: 11.10.2023 KR 20230135282
(71) Applicant: LS Cable & System Ltd., Anyang-si, Gyeonggi-do 14119 (KR)
(72) Inventor: PARK, Chan Woong, Hwaseong-si Gyeonggi-do 18429 (KR); PARK, Hyun Ho, Seoul 04363 (KR); YOON, Chang Min, Gumi-si Gyeongsangbuk-do 39461 (KR); CHO, Min Sang, Seoul 02225 (KR); EUN, Seung Hwan, Seoul 06990 (KR); PARK, Sang Wook, Gumi-si Gyeongsangbuk-do 39448 (KR); SHIN, Seung Hyun, Suwon-si Gyeonggi-do 16679 (KR); AHN, Seong Yeon, Suwon-si Gyeonggi-do 16549 (KR)
(74) Representative: K&L Gates LLP
(86) International application number: PCT/KR2024/015336
(87) International publication number: WO 2025/079984

(57) **Abstract**

The present invention relates to a clamp having a monitoring function for a central tension line for an overhead transmission line and an overhead transmission line system including same. Specifically, the present invention relates to a clamp having a monitoring function for a central tension line for an overhead transmission line and an overhead transmission line system including same, the clamp being capable of easily and accurately detecting whether the central tension line is damaged not only immediately before installing the overhead transmission line on a steel tower but also after installing the overhead transmission line on the steel tower, and improving the workability of installing the overhead transmission line and the stability of a worker.

## Description

### [Technical Field]

The present invention relates to a clamp having a monitoring function of a central tension line for an overhead transmission line and an overhead transmission line system including the same. Specifically, the present invention relates to a clamp having a monitoring function of a central tension line for an overhead transmission line and an overhead transmission line system including the same, which are capable of easily and accurately detecting whether or not the central tension line is damaged not only immediately before installing the overhead transmission line on a steel tower but also after installing the overhead transmission line on the steel tower, and capable of improving workability of an overhead transmission line installation work and stability of a worker.

### [Background Art]

In a method of supplying electricity from a power plant to a city or a factory through a substation, there are an overhead transmission type using an overhead transmission line connected by a steel tower and an underground transmission type using an underground transmission line buried underground, and the overhead transmission type accounts for about 90% of a domestic transmission method.

As a conventional overhead transmission line, an Aluminum Conductor Steel Reinforced (ACSR) overhead transmission line, in which several strands of aluminum alloy conductors are stranded on an outer periphery of a central tension line for realizing high tensile strength characteristics, is generally used. In addition, the overhead transmission line is installed in a manner that clamps are fastened to both ends and the clamps are fixed to the steel tower, and in the steel tower, a plurality of overhead transmission lines can be connected as a whole by connecting each clamp of the plurality of fixed overhead transmission lines with a separate jumper cable.

However, the Aluminum Conductor Steel Reinforced (ACSR) overhead transmission line has a large sag because a load of a steel core itself used as the central tension line is large, and there is a limit in increasing a weight of the aluminum conductor to increase a transmission amount of the overhead transmission line, and there has been an attempt to reduce the weight of the overhead transmission line by using a fiber reinforced composite material for the central tension line in order to reduce the sag of the overhead transmission line or increase the transmission amount compared to the same sag.

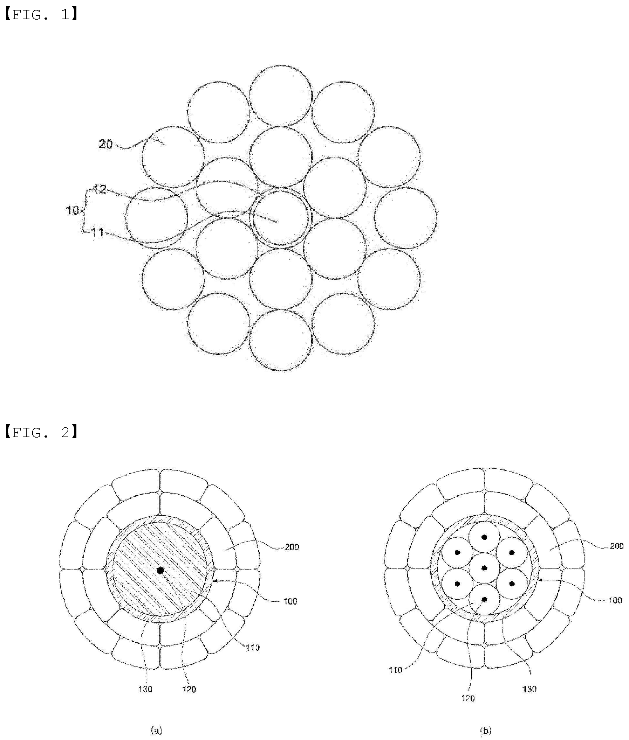

FIG. 1 schematically illustrates a cross-sectional structure of a conventional overhead transmission line provided with a central tension line including a fiber reinforced composite material.

As illustrated in FIG. 1, the conventional overhead transmission line may include a central tension line 10 and conductor wires 20 disposed around the same, and the central tension line 10 may include a core layer 11 made of a carbon fiber reinforced composite material and a cover layer 12 made of a glass fiber reinforced composite material for suppressing corrosion of the conductor wires 20 due to dissimilar metal contact corrosion, that is, galvanic corrosion, between the core layer 11 and the conductor wires 20.

However, such a conventional overhead transmission line has a limit in weight reduction of the overhead transmission line due to a high specific gravity of the glass fiber reinforced composite material constituting the cover layer 12 of the central tension line 10, for example, a specific gravity of about 2.0 g/cm³, and accordingly, sag characteristics may be deteriorated, and furthermore, the conductor wires 20, which are disposed around the central tension line and contact and friction with the cover layer 12, are damaged by the high hardness of the glass fiber reinforced composite material, and as a result, problems of an increase in resistance and a reduction in transmission amount due to a decrease in cross-sectional area of the conductor wires 20 may occur. In addition, there is also a problem that a manufacturing cost of the overhead transmission line increases by application of the relatively expensive glass fiber reinforced composite material.

In addition, the conventional overhead transmission line has a problem that whether or not the central tension line 10 disposed therein is damaged cannot be confirmed immediately before installation of the overhead transmission line because the conductor wires 20 are disposed around the central tension line 10.

Meanwhile, a technology has been applied in which an optical fiber is inserted into an inside of the central tension line 10, light of a specific wavelength is transmitted to one end of the central tension line 10 through an optical transmission device, and an optical detection device is mounted on the other end of the central tension line 10 to confirm whether or not the transmitted light is detected, thereby confirming whether or not the optical fiber is damaged and accordingly confirming whether or not the central tension line 10 is damaged.

However, in a case where the optical fiber is inserted into the inside of the central tension line 10, there is a problem that it is difficult to accurately detect whether or not the central tension line is damaged, such as the optical fiber is not damaged despite damage to the central tension line 10, or conversely, only the optical fiber is damaged while the central tension line 10 is not damaged.

In addition, since it is a method of confirming whether or not damage occurs by mounting the optical transmission device and the optical detection device on both ends of the central tension line 10, respectively, it is possible to confirm whether or not damage occurs only before a clamping work of the overhead transmission line, and whether or not damage occurs cannot be detected after installation of the overhead transmission line, and furthermore, there is a problem that the overhead transmission line installation work is delayed and complicated and workability is deteriorated, such as a worker having to mount the optical transmission device and the optical detection device in order to confirm whether or not the central tension line is damaged before the clamping work at the steel tower.

Further, in a case of visually observing an optical signal transmitted from one end to the other end of the optical fiber inserted into the inside of the central tension line 10, only whether or not the optical fiber is completely disconnected can be detected, and detection of where a portion where damage to the optical fiber and the central tension line occurred is located is impossible.

Therefore, a situation is such that a clamp having a damage detection function of a central tension line for an overhead transmission line and an overhead transmission line system including the same, which can easily and accurately detect whether or not the central tension line is damaged not only immediately before installing the overhead transmission line on a steel tower but also after installing the overhead transmission line on the steel tower and can improve workability of an overhead transmission line installation work, are urgently required.

### [Disclosure]

### [Technical Problem]

The present invention has an object to provide a clamp having a damage detection function of a central tension line for an overhead transmission line and an overhead transmission line system including the same, which can easily and accurately detect whether or not the central tension line is damaged not only immediately before installing the overhead transmission line on a steel tower but also after installing the overhead transmission line on the steel tower, and can improve workability of an overhead transmission line installation work.

### [Technical Solution]

To achieve the objects, the present invention is directed to providing
a clamp for an overhead transmission line for installing the overhead transmission line including a central tension line and aluminum wires disposed around the central tension line on a steel tower, the clamp comprising: a body part provided with a hollow hole, into which the overhead transmission line is insertable, and configured to fix the aluminum wires of the overhead transmission line inserted into the hollow hole; and a tension part configured to fix the central tension line of the overhead transmission line inserted into the hollow hole and provided with a connecting ring connecting the overhead transmission line to the steel tower, in which the body part and the tension part are provided with a through-hole, through which an optical fiber for detection provided in the central tension line passes to be drawn out to an outside.

Here, the clamp for an overhead transmission line further comprises: a jumper terminal fastened to the body part and to which a jumper cable is connected, in which the optical fiber for detection is connected to an optical fiber for connection provided in the jumper cable.

In addition, the jumper terminal comprises a first jumper terminal fastened to the body part and a second jumper terminal connected to the jumper cable, and the first jumper terminal and the second jumper terminal are coupled.

The first jumper terminal is provided with a through-hole, through which the optical fiber for detection passes to be drawn out to the outside, and the second jumper terminal is provided with a through-hole, through which the optical fiber for connection passes to be drawn out to the outside.

Further, optical fiber couplers coupled to each other are provided at each of the drawn-out ends of the optical fiber for detection and the optical fiber for connection.

Here, the clamp for an overhead transmission line further comprises: a kit case configured to cover the optical fiber couplers and fastened to the first jumper terminal.

In addition, an empty space inside the kit case is filled with a filler.

Further, the filler is silicone or an epoxy resin.

Meanwhile, a part of an end of the central tension line is drawn out through the through-hole together with the optical fiber for detection provided in the central tension line.

In addition, the jumper cable comprises a steel tube and an optical fiber for connection mounted inside the steel tube, and the steel tube is drawn out to the outside through the through-hole of the second jumper terminal and is inserted into an inside of the kit case.

Meanwhile, there is provided an overhead transmission line system, comprising: a plurality of overhead transmission lines; and the clamp for an overhead transmission line as described above fastened to both ends of each of the plurality of overhead transmission lines.

In addition, the plurality of overhead transmission lines comprise a central tension line in a form in which a plurality of elemental wires are stranded.

Further, an optical fiber for detection is provided inside each of two or more elemental wires among the plurality of elemental wires, some of the optical fibers for detection detect whether or not the central tension line is damaged, and the remaining part of the optical fibers for detection detect other factors.

Further, there is provided a method for installing an overhead transmission line, the method comprising: fastening the clamp for an overhead transmission line as described above to both ends of the overhead transmission line; transporting the overhead transmission line, to which the clamps are fastened at both ends, to an installation location; connecting a connecting ring of a tension part in the clamp to the installation location; fastening a jumper terminal, to which a jumper cable is connected, to a body part in the clamp; and connecting an optical fiber for detection provided in the central tension line of the overhead transmission line and an optical fiber for connection provided in the jumper cable to each other.

### [Advantageous Effects]

A clamp having a monitoring function of a central tension line for an overhead transmission line and an overhead transmission line system including the same according to the present invention, through a new structure of the clamp, allows optical fibers capable of detecting whether or not the central tension line is damaged or the like to be connected as a whole in a plurality of overhead transmission lines connected as a whole via a plurality of steel towers, thereby exhibiting excellent effects that whether or not the central tension line is damaged can be easily and accurately detected not only immediately before installing the overhead transmission line on the steel tower but also after installing the overhead transmission line on the steel tower, and workability of an overhead transmission line installation work can be improved.

In addition, since the clamp is fastened to the overhead transmission line from a factory and the optical fiber for detection is worked into a connectable state before being transported to an installation location, there is no need for a worker to fasten the clamp on the steel tower, which has an effect of securing workability of the installation work of the overhead transmission line and safety of the worker.

### [Description of Drawings]

FIG. 1 schematically illustrates a cross-sectional structure of a conventional overhead transmission line.
FIG. 2 is an embodiment regarding a cross section of an overhead transmission line applied to an overhead transmission line system according to the present invention.
FIG. 3 is an embodiment regarding a cross section of a central tension line applied to the overhead transmission line illustrated in (a) of FIG. 2.
FIG. 4 is a longitudinal sectional view of a state in which a detection part is exposed from a core layer in the central tension line illustrated in FIG. 3.
FIG. 5 schematically illustrates a state in which one end of the overhead transmission line illustrated in FIG. 2 is fastened to a clamp.
FIG. 6 schematically illustrates a state in which configurations of the clamp in FIG. 5 are separated from each other.
FIG. 7 is an embodiment regarding a cross section of the jumper cable illustrated in FIG. 5.
FIG. 8 is a schematic diagram showing an example of detecting whether or not the central tension line is damaged by an Optical Time Domain Reflectometer (OTDR) method.

### [Mode for Disclosure]

Hereinafter, exemplary embodiments of the present invention will be described in detail. However, the present invention is not limited to the exemplary embodiments to be described below and may be specified as other aspects. On the contrary, the embodiments introduced herein are provided to make the disclosed content thorough and complete, and sufficiently transfer the technical teachings of the present invention to those skilled in the art. The same reference numbers throughout the specification refer to the same components. FIG. 2 is an embodiment regarding a cross section of an overhead transmission line applied to an overhead transmission line system according to the present invention.

As illustrated in FIG. 2, the overhead transmission line may be formed by a conductor, in which a plurality of aluminum alloy or aluminum wires 200 are stranded, being disposed around the central tension line 100.

Specifically, the aluminum wire 200 may be made of 1000-series aluminum such as 1050, 1100, 1200, etc., or an aluminum-zinc-based alloy, and a tensile strength before heat treatment may be about 15 to 25 kgf/mm² and an elongation before heat treatment may be less than about 5%, and a tensile strength after heat treatment may be less than about 9 kgf/mm² and an elongation after heat treatment may be about 20% or more.

In addition, the aluminum wire 200 has a trapezoidal shape in cross section, and a space factor (or fill factor) of the conductor is significantly increased compared to an aluminum wire of a conventional overhead transmission line having a circular cross section, so that a transmission amount and transmission efficiency of the overhead transmission line can be maximized. For example, a space factor of a conventional conductor including an aluminum wire having a circular cross section is about 75%, whereas a space factor of a conductor including an aluminum wire having a trapezoidal cross section may be about 95% or more.

The aluminum wire 200 may be formed to have a trapezoidal shape in cross section by conform extrusion or wire drawing using a trapezoidal die. When the aluminum wire 200 is formed by conform extrusion, a separate heat treatment is unnecessary because it is naturally heat-treated during the extrusion process, but when it is formed by a drawing process, a separate heat treatment may be subsequently performed.

The aluminum wire 200 is heat-treated during the conform extrusion process or subsequently heat-treated after drawing, so that a region where stress is concentrated, which is formed inside an aluminum structure due to torsion, etc. in the extrusion or drawing process and interferes with a flow of electrons, can be relieved, and thereby electrical conductivity of the aluminum wire 200 is improved, and as a result, the transmission amount and transmission efficiency of the overhead transmission line can be improved.

A cross-sectional area and the number of the aluminum wires 200 may be appropriately selected according to a standard of the overhead transmission line, for example, the cross-sectional area of the aluminum wire 200 may be 3.14 to 50.24 mm², and in a case where the aluminum wire 200 having a trapezoidal cross section is converted into an aluminum wire having the same cross-sectional area and a circular cross section, a cross-sectional diameter of the converted aluminum wire may be 2 to 8 mm.

In addition, the number of the aluminum wires 200 may be, for example, 12 to 40, and preferably, it may have a multi-layer structure in which 8 are included in a core layer and 12 are included in a cover layer.

As described above, the aluminum wire 200 may be heat-treated for improving electrical conductivity, and when heat-treated in this way, since a surface becomes vulnerable to scratches by being softened, a plurality of scratches may be generated on the surface of the aluminum wire 200 due to external pressure, impact, or the like during manufacturing, transportation, and installation processes of the overhead transmission line, and thereby corona discharge may occur during operation of the overhead transmission line, so that high-frequency noise may be induced.

Therefore, a surface hardness reinforcement layer may be formed on the surface of the aluminum wire 200 in order to suppress generation of scratches on the surface. Preferably, a thickness of the surface hardness reinforcement layer may be 5 µm or more, preferably exceeding 10 µm and being 50 µm or less. When the thickness of the surface hardness reinforcement layer is less than 5 µm, since the surface hardness of the aluminum wire 200 cannot be sufficiently improved, a plurality of scratches may be generated on the surface of the aluminum wire 200 due to external pressure, impact, or the like during processes such as manufacturing, transporting, and installing of the overhead transmission line, whereas when it exceeds 50 µm, the surface hardness reinforcement layer may be locally damaged or cracks may occur during bending such as the overhead transmission line being wound around a bobbin.

Further, the aluminum wire 200 has the surface hardness reinforcement layer formed on the surface thereof, so that a tensile strength of the overhead transmission line is further improved, and as a result, a sag of the overhead transmission line can be further suppressed.

The surface hardness reinforcement layer may be formed on the entire surfaces of the plurality of aluminum wires 200 constituting the overhead transmission line, and preferably, may be formed on the entire surface of each of the aluminum wires 200 existing in the outermost cover layer among the plurality of aluminum wires 200, and more preferably, may be formed on an outer surface forming an outer periphery of the overhead transmission line among the surfaces of each of the aluminum wires 200 existing in the outermost cover layer.

The surface hardness reinforcement layer is not particularly limited as long as it can suppress generation of scratches by improving the hardness of the surface of the aluminum wire 200, and for example, may include an aluminum oxide film formed by an anodizing treatment, a plating film of nickel (Ni), tin (Sn), etc., or the like.

Specifically, an anodizing treatment method of the surface of the aluminum wire 200 may include processes such as degreasing (cleaning) for removing organic contaminants such as fats and oils existing on the surface of the aluminum wire 200, rinsing for washing the surface of the aluminum wire 200 with clean water, etching for removing aluminum oxide existing on the surface of the aluminum wire 200 with sodium hydroxide and the like, desmutting for dissolving and removing alloy components remaining on the surface of the aluminum wire 200 after etching, rinsing for washing the surface of the aluminum wire 200 again with clean water, anodizing performed while applying a voltage of 20 to 40 V to form a dense and stable aluminum oxide film on the surface of the aluminum wire 200, rinsing for washing the surface of the aluminum wire 200 again with clean water, and drying for air-drying the same at room temperature.

When the surface hardness reinforcement layer includes the aluminum oxide film by the anodizing treatment, since insulating characteristics of the aluminum oxide film are excellent, power loss can be reduced due to an insulating effect between the aluminum wires 200, and a current capacity can be increased by quickly releasing Joule heat generated during transmission to the atmosphere due to high radiation characteristics of the aluminum oxide film.

In addition, the surface hardness reinforcement layer may be further coated with a polymer resin such as a fluorine resin. The polymer resin imparts a superhydrophobic effect to the aluminum oxide film, thereby suppressing adsorption of dust or pollutants in the atmosphere on the surface of the overhead transmission line or accumulation of snow or generation of ice in winter.

The surface hardness reinforcement layer may include both the aluminum oxide film by the anodizing treatment and the plating film of nickel (Ni), tin (Sn), etc. When the surface hardness reinforcement layer includes both the aluminum oxide film and the plating film, the aluminum oxide film may be disposed at a lower portion and the plating film may be disposed at an upper portion of the aluminum oxide film, and a thickness ratio of the aluminum oxide film and the plating film may be about 3:1 to 5:1.

When the thickness ratio of the aluminum oxide film and the plating film is 3:1 to 5:1, the hardness of the surface of the aluminum wire 200 can be sufficiently improved by the aluminum oxide film which is relatively thick and has an excellent surface hardness improvement effect, and at the same time, when the overhead transmission line is bent such as being wound around a bobbin or the like, local cracks, damage, etc. of the surface hardness reinforcement layer can be effectively suppressed by the plating film which is disposed on the outside and has a relatively small risk of occurrence of cracks, damage, etc. with respect to bending.

Meanwhile, as illustrated in (a) of FIG. 2, the central tension line 100 may include a core layer 110 made of fiber reinforced plastic, an optical fiber for detection 120 provided inside the core layer 110, and the like. Here, a protective tube surrounding the optical fiber for detection 120 may be further included, and the protective tube may include a metal or a polymer resin.

In addition, as illustrated in (b) of FIG. 2, the central tension line 100 may be formed in a form in which the core layer 110 is stranded with a plurality of elemental wires made of fiber reinforced plastic, and the optical fiber for detection 120 may be provided inside each of two or more elemental wires among the plurality of elemental wires, and some of the plurality of optical fibers for detection 120 may detect whether or not the central tension line is damaged, and the remaining optical fibers for detection may detect other factors such as temperature, sag, and the like.

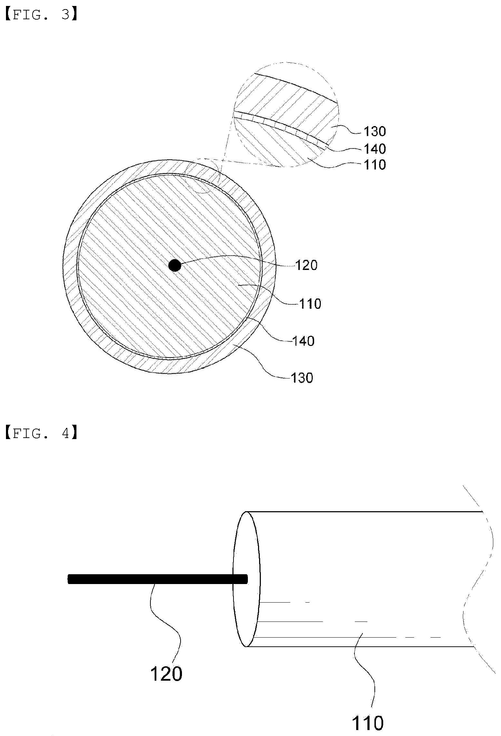

FIG. 3 is an embodiment regarding a cross section of a central tension line applied to the overhead transmission line illustrated in (a) of FIG. 2, and FIG. 4 is a longitudinal sectional view of a state in which an optical fiber for detection is exposed from a core layer in the central tension line illustrated in FIG. 3.

As illustrated in FIG. 3 and 4, the central tension line 100 may optionally further include a cover layer 130 and the like surrounding the core layer 110. Here, a tensile strength of the central tension line including the optical fiber for detection should be 2,800 MPa or more to secure sag characteristics that prevent the overhead transmission line from sagging downward.

When the central tension line 100 further includes the cover layer 130, a gap 140 may be formed between the core layer 110 and the cover layer 130. The cover layer 130 may be formed by a method such as conform extrusion of a metal rod such as aluminum or welding of a metal tape such as aluminum, and in particular, since the cover layer 130 may be formed through conform extrusion of an aluminum rod, the cover layer 130 may be formed with a long length, so that productivity can be improved and formation and adjustment of the gap 140 can be easy.

In addition, in a case of performing conform extrusion, since the cover layer 130 having a continuously formed surface without a joint such as a welded portion may be formed, it is possible to prevent galvanic corrosion from occurring due to the joint portion being damaged by bending stress acting on the central tension line 100 during or after manufacturing and installation of the central tension line 100 or the overhead transmission line provided with the same.

The cover layer 130 and the gap 140 may be formed by extruding a metal material or the like in a tube shape. Specifically, the metal material surrounding the cover layer 130 and having an inner diameter larger than an outer diameter of the cover layer 130 is formed by extruding in a tube shape, and then the cover layer 130 may be formed by gradually reducing the diameter, and a size of the gap 140 may be adjusted, and for example, a total cross-sectional area of the gap 140 may be about 0.15 to 7.1 mm² .

Therefore, it is possible to prevent deterioration of the core layer 110 by suppressing heat during conform extrusion of the aluminum rod for forming the cover layer 130 from being transferred to the core layer 110, and furthermore, when bending stress is applied to the central tension line 100 for an overhead transmission line, the core layer 110 and the cover layer 130 are made to behave separately due to the gap 140, so that most of the bending stress is applied to the core layer 110 including a fiber reinforced plastic wire rod having a relatively large tensile strength to realize low-sag characteristics of the overhead transmission line, and at the same time, stress applied to the cover layer 130 made of an aluminum material or the like having a relatively low tensile strength is minimized, so that damage to the central tension line 100 can be suppressed during winding around a bobbin, drum, pulley, etc. for manufacturing or installation of the overhead transmission line.

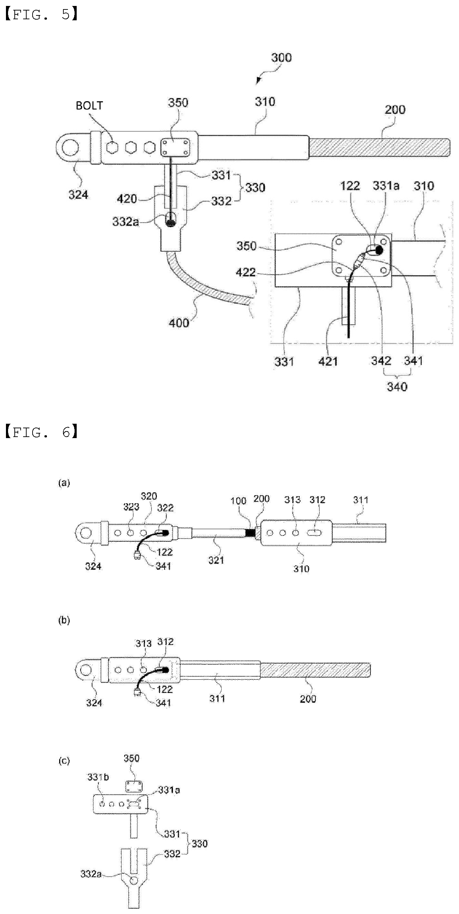

FIG. 5 schematically illustrates a state in which one end of the overhead transmission line illustrated in (a) of FIG. 2 is fastened to a clamp, FIG. 6 schematically illustrates a state in which configurations of the clamp in FIG. 5 are separated from each other, and it is an embodiment regarding a cross section of the jumper cable illustrated in FIG. 5.

As illustrated in FIG. 5, a clamp 300 for fixing an overhead transmission line to a steel tower may include a body part 310 fixing the aluminum wire 200 of the overhead transmission line, a tension part 320 fixing the central tension line 100 of the overhead transmission line in a hollow hole inside the clamp body part 310, a jumper terminal 330 connecting the overhead transmission line and a jumper cable 400 by being fastened to the body part 310, and an optical fiber coupler 340 connecting an optical fiber for detection 122 of a detection part 120 provided in the central tension line of the overhead transmission line and an optical fiber for connection 422 provided in the jumper cable 400.

As illustrated in (a) of FIG. 6, the overhead transmission line is inserted into the hollow hole of the body part 310, and the central tension line 100 exposed at the end of the overhead transmission line is inserted into a steel sleeve 321 of the tension part 320, and in this state, the steel sleeve 321 is compressed and fixed. In addition, at the end of the steel sleeve 321, the optical fiber for detection 122 provided in the central tension line 100 is exposed and drawn out to the outside through a first through-hole 322 of the tension part 320, and then a first coupler 341 is fastened to an end of the drawn-out optical fiber for detection 122.

In addition, as illustrated in (b) of FIG. 6, the body part 310 is moved to cover an outside of the tension part 320, and the optical fiber for detection 122 drawn out to the outside through the first through-hole 322 is made to be drawn out to the outside through a second through-hole 312, and a conductor sleeve 311 of the body part 310 is compressed to fix the aluminum wire 200 of the overhead transmission line.

Then, a first jumper terminal 331 illustrated in (c) of FIG. 6 is fastened to the body part 310, and the optical fiber for detection 122 drawn out to the outside through the second through-hole 312 of the body part 310 may be drawn out to the outside through a third through-hole 331a provided in the first jumper terminal 331, and the optical fiber for detection 122 and the first coupler 341 drawn out to the outside through the third through-hole 331a may be covered with a kit case 350 which is a cover.

In addition, since an inside of the kit case 350 is filled with a filler such as silicone or epoxy resin, the optical fibers 122 and 422 and the coupler 340 located inside the kit case 350 can be protected from external moisture, impact, vibration, and the like, and as a result, noise in optical signal transmission and reception by the optical fibers 122 and 422 can be minimized or avoided.

Here, the body part 310, the tension part 320, and the first jumper terminal 331 may be coupled to each other by a bolt fastened by simultaneously passing through a bolt hole 313 of the body part 310, a bolt hole 323 of the tension part 320, and a bolt hole 331b of the first jumper terminal 331.

In addition, the first jumper terminal 331 is coupled to a second jumper terminal 332 to which the jumper cable 400 is coupled, and a steel tube 421 provided in the jumper cable 400 and the optical fiber for connection 422 mounted inside the steel tube 421 are drawn out to the outside through a fourth through-hole 332a provided in the second jumper terminal 332, a second coupler 342 is fastened to an end of the optical fiber for connection 422, and the steel tube 421 extends into the inside of the kit case 350 so that the first coupler 341 and the second coupler 342 are coupled and connected inside the kit case 350.

Further, only the optical fiber for detection 122 may pass through the through-holes 312, 322, and 331a and be exposed to the outside, or a part of an end of the central tension line in which the optical fiber for detection 122 is mounted may partially pass through the through-holes 312, 322, and 331a and be exposed to the outside. In a case where the part of the end of the central tension line passes through the through-holes 312, 322, and 331a and is exposed to the outside, since the optical fiber for detection 122 is not directly exposed inside the hollow hole of the body part 310 but is exposed inside the kit case 350, the optical fiber for detection 122 can be protected from external moisture, impact, vibration, and the like inside the hollow hole.

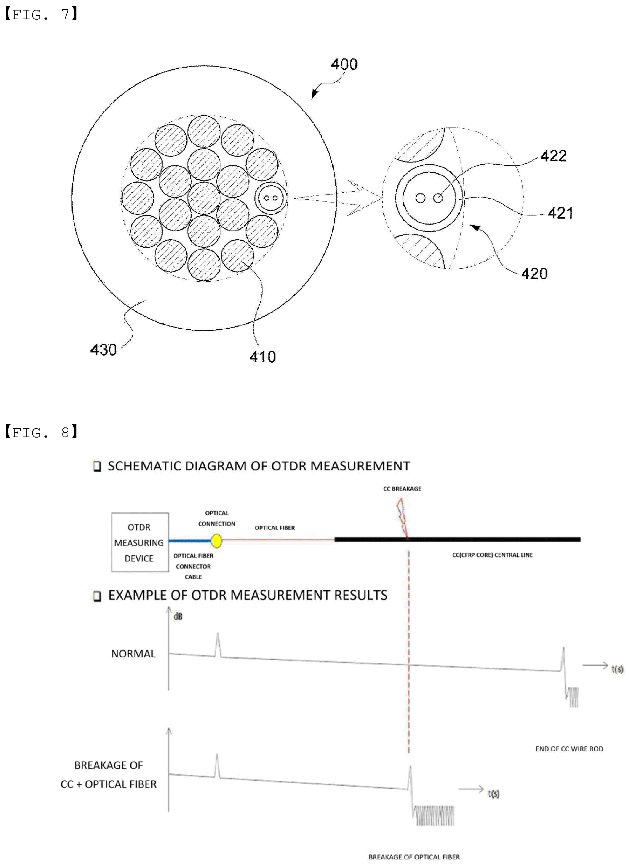

Meanwhile, since the body part 310 is made of a metal material such as aluminum, it can be electrically connected to the aluminum wire 200 of the overhead transmission line, and the tension part 320 may include a connecting ring 324 that can be fixed to the steel tower. In addition, as illustrated in FIG. 7, the jumper cable 400 may include a conductor 410 including a plurality of elemental wires, a steel tube 421 replacing one or more of the plurality of elemental wires and the optical fiber for connection 422 mounted inside the steel tube 421, an insulating layer 430 surrounding the conductor 410 and the steel tube 421 as a whole, and the like.

Thereby, the aluminum wire 200 of the overhead transmission line fixed to one steel tower and the body part 310 of the clamp 300 compressing the aluminum wire 200 are electrically connected, the body part 310 and the jumper terminal 330 fastened thereto are electrically connected, the jumper terminal 330 and the conductor 410 of the jumper cable 400 connected thereto are electrically connected, and in a manner that the jumper cable 400 is again connected to a clamp fastened to an end of another overhead transmission line fixed to the steel tower, a plurality of overhead transmission lines may be electrically connected as a whole through a plurality of steel towers via the clamp fastened to both ends and the jumper cable.

A conventional clamp for an overhead transmission line has a structure in which an internal optical fiber cannot be exposed to the outside after being fastened to the overhead transmission line, so that it is impossible to connect an optical transmission device or an optical detection device to the optical fiber, and thus whether or not the central tension line is damaged could not be detected after installing the overhead transmission line on the steel tower.

However, in the clamp according to the present invention, an optical fiber inside the overhead transmission line is capable of being exposed to the outside even after being fastened to the overhead transmission line, so that not only is connection of an optical transmission device or an optical detection device possible, but also optical fiber connection of the entire overhead transmission line is possible via the jumper cable, and thus whether or not the central tension line is damaged can be accurately and easily detected throughout the entire overhead transmission line even during operation of the overhead transmission line.

As described above, when a plurality of optical fibers for detection are provided, a plurality of optical fibers for connection 422 are also provided in the jumper cable 400, and a plurality of optical fiber couplers 340 for respectively connecting the plurality of optical fibers for detection 122 and the plurality of optical fibers for connection 422 may also be provided and located inside the kit case 350.

Therefore, according to the overhead transmission line system according to the present invention, after fastening the body part 310 and the tension part 320 of the clamp to each of both ends of the overhead transmission line at a ground workshop such as a factory, the optical fiber for detection 122 of the central tension line 100 is drawn out through the first and second through-holes 312 and 322, and then a first coupler 341 is fastened to an end of the optical fiber for detection 122, and the kit case 350 may be fastened to the body part 310 so as to cover and protect the first coupler 341.

The overhead transmission line, to which the clamps are already fastened at both ends in this way, is transported between adjacent steel towers. The transport of the overhead transmission line may be performed by pulling the extension line in a state where a separate extension line is connected to the connecting ring 324 of the tension part 320 among the clamps 300 at one end of the overhead transmission line across an upper portion of the steel tower.

Then, a worker, on the steel tower, connects the connecting ring 324 of the tension part 320 among the clamps 300 to the steel tower, separates the kit case 350 from the body part 310, and then fastens the first jumper terminal 331 among the jumper terminals 330 to the body part 310.

Next, the second jumper terminal 332 to which the jumper cable 400 is connected is connected to the first jumper terminal 331, the optical fiber for connection 422 mounted inside is drawn out from the steel tube 421 drawn out through the fourth through-hole 332a of the second jumper terminal 332, a second coupler 342 is fastened to an end thereof, and the second coupler 342 is connected to the first coupler 341.

When the connection is completed in this way, the kit case 350 is fastened to the first jumper terminal 331 such that the first coupler 341 and the second coupler 342 connected inside the kit case 350 are located, and then an empty space inside the kit case 350 is filled with a filler such as silicone or epoxy resin.

Therefore, in the method of constructing an overhead transmission line system according to the present invention, since the overhead transmission line is transported to an installation location in a state where the clamp is fastened to the overhead transmission line, there is no need for a worker to fasten the clamp on the steel tower, so that workability of the installation work of the overhead transmission line and safety of the worker are improved, and a work of connecting the optical fiber 122 of the detection part 120 provided in the overhead transmission line as a whole is easy, so that whether or not the central tension line is damaged can be easily and accurately detected even after the overhead transmission line is installed on the steel tower.

FIG. 8 is a schematic diagram showing an example of detecting whether or not the central tension line is damaged by an Optical Time Domain Reflectometer (OTDR) method.

Among a plurality of overhead transmission lines connected as a whole through a plurality of steel towers, since there is no need to connect the jumper cable 400 to the clamp 300 fastened to the ends of the overhead transmission lines disposed at both ends, the jumper terminal 330 does not need to be provided, and a measuring device such as OTDR or DTS is connected to an optical fiber for detection exposed to the outside through the first through-hole 322 in the body part 310 among the clamps 300.

Specifically, as illustrated in FIG. 8, an optical signal is input in a state where the optical fiber exposed at one end of the cable is connected to an optical fiber connector cable through an OTDR measuring device, and by collecting the optical signal reflected and returned from the other end of the optical fiber again, optical loss due to breakage of the optical fiber or the like is measured, and thereby whether or not breakage of the optical fiber or the like occurs and a location thereof can be measured; since such breakage of the optical fiber is caused by damage to the central tension line or the like, not only whether or not the central tension line is damaged but also a damaged location can be detected based on the measured value for the optical fiber.

That is, in a case of a normal central tension line, a change in signal magnitude occurs at the end of the clamped central tension line, but when breakage occurs in the middle of the central tension line, a change in signal magnitude occurs at the location where the breakage occurred. That is, the location where the breakage occurred can be recognized as the end of the central tension line. Therefore, by recognizing the change in the signal magnitude and the location where the change occurred, it is possible to detect whether or not the central tension line is damaged and the damaged location.

While the present specification has been described above with reference to the exemplary embodiments of the present invention, it may be understood by those skilled in the art that the present invention may be variously modified and changed without departing from the technical teachings and scope of the present invention disclosed in the claims. Therefore, it should be understood that any modified embodiment that essentially includes the constituent elements of the claims of the present invention is included in the technical scope of the present invention.

## Claims

1. A clamp for an overhead transmission line for installing the overhead transmission line including a central tension line and aluminum wires disposed around the central tension line on a steel tower, the clamp comprising:
a body part provided with a hollow hole, into which the overhead transmission line is insertable, and configured to fix the aluminum wires of the overhead transmission line inserted into the hollow hole; and
a tension part configured to fix the central tension line of the overhead transmission line inserted into the hollow hole and provided with a connecting ring connecting the overhead transmission line to the steel tower,
wherein the body part and the tension part are provided with a through-hole, through which an optical fiber for detection provided in the central tension line passes to be drawn out to an outside.

2. The clamp for an overhead transmission line of claim 1, further comprising:
a jumper terminal fastened to the body part and to which a jumper cable is connected,
wherein the optical fiber for detection is connected to an optical fiber for connection provided in the jumper cable.

3. The clamp for an overhead transmission line of claim 2, wherein the jumper terminal comprises a first jumper terminal fastened to the body part and a second jumper terminal connected to the jumper cable, and the first jumper terminal and the second jumper terminal are coupled.

4. The clamp for an overhead transmission line of claim 3, wherein the first jumper terminal is provided with a through-hole, through which the optical fiber for detection passes to be drawn out to the outside, and the second jumper terminal is provided with a through-hole, through which the optical fiber for connection passes to be drawn out to the outside.

5. The clamp for an overhead transmission line of claim 4, wherein optical fiber couplers coupled to each other are provided at each of the drawn-out ends of the optical fiber for detection and the optical fiber for connection.

6. The clamp for an overhead transmission line of claim 5, further comprising:
a kit case configured to cover the optical fiber couplers and fastened to the first jumper terminal.

7. The clamp for an overhead transmission line of claim 6, wherein an empty space inside the kit case is filled with a filler.

8. The clamp for an overhead transmission line of claim 7, wherein the filler is silicone or an epoxy resin.

9. The clamp for an overhead transmission line of any one of claims 1 to 8, wherein a part of an end of the central tension line is drawn out through the through-hole together with the optical fiber for detection provided in the central tension line.

10. The clamp for an overhead transmission line of any one of claims 6 to 8, wherein the jumper cable comprises a steel tube and an optical fiber for connection mounted inside the steel tube, and the steel tube is drawn out to the outside through the through-hole of the second jumper terminal and is inserted into an inside of the kit case.

11. An overhead transmission line system, comprising:
a plurality of overhead transmission lines; and
the clamp for an overhead transmission line of any one of claims 1 to 8 fastened to both ends of each of the plurality of overhead transmission lines.

12. The overhead transmission line system of claim 11, wherein the plurality of overhead transmission lines comprise a central tension line in a form in which a plurality of elemental wires are stranded.

13. The overhead transmission line system of claim 12, wherein an optical fiber for detection is provided inside each of two or more elemental wires among the plurality of elemental wires, some of the optical fibers for detection detect whether or not the central tension line is damaged, and the remaining part of the optical fibers for detection detect other factors.

14. A method for installing an overhead transmission line, the method comprising:
fastening the clamp for an overhead transmission line of any one of claims 1 to 8 to both ends of the overhead transmission line;
transporting the overhead transmission line, to which the clamps are fastened at both ends, to an installation location;
connecting a connecting ring of a tension part in the clamp to the installation location;
fastening a jumper terminal, to which a jumper cable is connected, to a body part in the clamp; and
connecting an optical fiber for detection provided in the central tension line of the overhead transmission line and an optical fiber for connection provided in the jumper cable to each other.
